# EUROPEAN PATENT APPLICATION

(11) **EP 2 355 011 A1**
(43) Date of publication of application: **10.08.2011**
(21) Application number: 10151823.1
(22) Date of filing: 27.01.2010
(51) Int. Cl.: G06K 19/07, G06K 19/077, A01K 11/00, H02K 35/02

(54) **Transponder with integrated current generator**

(71) Applicant: Datamars SA, 6930 Bedano-Lugano (CH)
(72) Inventor: Stegmaier, Peter, Dr., 6946 Ponte Capriasca (CH); Pachoud, Damien, 6963 Pregassona (CH)
(74) Representative: Harmann, Bernd-Günther

(57) **Abstract**

The invention relates to a transponder, more particularly one that can be implanted into living beings, comprising an integrated circuit (2) having at least a transceiver module (21) and a data storage module (22) for providing ID data, an antenna (3) connected with the integrated circuit (2) for receiving and transmitting a signal, and a transponder cover (4).

Also arranged inside the transponder cover (4) is a current generator with at least one magnetic field generator as the first component (5) and the antenna (3) as the second component (6), the components (5,6) being designed and arranged in such a way that they can move relative to each other, particularly in translation and in a guided fashion, and that by their relative motion (41) an electric current is generated in the antenna (3).

## Description

The invention relates to a transponder according to the preamble of claim 1, more particularly to a transponder that can be implanted into living beings, and to a process of generating current for a transponder according to the preamble of claim 13.

Miniature transponders have been known for a long time, and amongst other things are used for identifying objects or living beings, for data storage, access control, or safety purposes and further, similar applications. Generically adapted transponders can more particularly be used in the body of a living being. To this end, such transponders are implanted into animals or people with a hypodermic needle, for instance, and are useful primarily for identifying the animals or people, in which case they can replace an often obtrusive ID tag worn on the outside. For such transponders to be implantable, they must have an appropriately miniaturized structure. All their components will then have to be housed, for example, in a plastic, glass or ceramic cover. The transponder may have dimensions adapted to the size of the living being. Transponders for birds or mice, for example, will have a size different from that of transponders for cats, dogs, cows, or elephants.

An implantable transponder has for instance been described in the European Patent Application No. 07.116.195.4 entitled "Implantable Miniature Transponder and Method for the Production Thereof".

In principle, such transponders have an integrated circuit, more particularly a chip sitting on a miniature board commonly including at least a transceiver element, a data storage module, and an energy storage module. An antenna transmitting and receiving data that is linked to the circuit is also set up within the transponder. In most cases the antenna is a coil antenna consisting of wire wound up into a coil, and including more particularly a ferrite core arranged within the coil.

Generally, one may distinguish between active, semi-passive, and passive transponders. Active and semi-passive transponders have their own power source, such as a miniature battery. On account of safety aspects, size, and lifetime, though, passive transponders lacking a battery are used for implantable transponders.

For reading of a passive transponder, a reader device generates a short-range electromagnetic field. Then not only data are transmitted to the transponder by the radiofrequency field generated close to the transponder but an electric current is also induced in the coil antenna of the transponder, and charges the short-term energy storage module most often consisting of a capacitor. As an answer, the transponder then uses the energy stored in the short-term storage module, for example, to send the ID data stored in the data storage module to the reading device, said ID data then being used for further processing or for display to a user.

Throughout the readout process, a durable field must be generated so as to meet the power needs of the microchip during readout. Depending on the operating frequency, the reader must emit a radiofrequency field of sufficiently high intensity in order to be able to read the passive transponders at distances that may for instance attain a few decimeters up to few meters.

Active transponders are those where the energy stored in the integrated miniature battery is used for transmitting the signal from the transponder. Here a considerably longer reading range of the signals that are transmitted can be attained than with passive transponders.

In addition, further activities of a transponder such as the acquisition of additional data via a sensor or via a data receiver can be supported even in absence of a reader when an internal power supply is available.

In semi-passive transponders, the power source is only used to cover the needs of the integrated circuit, and eventually those of integrated sensors, but not those of data transmission.

Thus, active and semi-passive transponders do have some advantages over passive transponders in their way of functioning and in their applicability, but active and semi-passive transponders with a miniature battery are not suitable up to now for being used as animal implants, since they have a limited lifetime - a transponder exchange on account of an empty battery being possible only with great difficulties - and pose danger in the body of a living being, they also need appropriately large dimensions that are a disadvantage.

It is one task of the invention, therefore, to provide an improved transponder.

It is a further task of the invention to provide a transponder that can be implanted into living beings and has an integrated power supply without the need for an integrated battery or accumulator. Particularly, the invention should provide the possibility to make sensing measurements by the transponder between read-out steps using a reader device, when no external power supply being available.

These tasks are accomplished by implementing the characterizing features of the independent claims. Features extending the invention in an alternative or advantageous way can be taken from the dependent claims.

The transponder according to the invention that can more particularly be implanted into living beings includes an integrated circuit having at least a transceiver module, a data storage module providing ID data, and especially an energy storage module, said circuit being specifically formed as a microchip, for example placed on a miniature board. The integrated circuit is connected with an antenna transmitting and receiving signals that advantageously is formed as a coil antenna, particularly one having a ferrite core.

The integrated circuit is set up more particularly as a longitudinal extension of the antenna, so that a compact unit is formed from them that can preferably be housed in a cylindrical transponder cover.

According to the invention, the transponder includes a current generator additionally integrated into the transponder cover, and having at least two components that are mobile relative to each other. The components are designed in such a way that a relative motion of the components more particularly caused by the transponder carrier will generate an electric current that can be used to charge the energy storage module. To this end a first one of the components is designed as magnetic field generator, and a second one as the antenna that is also used for data transfer. Now the components are in a mutual mobile arrangement that is such that a relative motion performed, and more particularly a guided translatory relative motion, will change the magnetic flux through an area enclosed by the windings of the antenna, so that an electric current is induced in the antenna.

Preferably, the antenna may be designed as a coil antenna made of conductor wire wound up to a coil, and specifically containing a ferrite core. The coil antenna as the second current generator component and the magnetic field generator are then set up in such a way that a relative motion that can occur in the longitudinal direction of the coil antenna is secured.

A miniaturized structure can be secured for an active or a semi-passive transponder, and a battery may eventually be omitted, when according to the invention, the antenna that is integrated anyhow into the transponder is used as component of an integrated current generator.

According to the invention, the function of a current generator can be secured and integrated into the transponder by adding a single further component generating a magnetic field, this component being able to be fitted into the generically linear structure of antenna and integrated circuit.

To charge an energy storage module, the invention thus makes use of the motions anyhow performed by the transponder carrier, that is, the living being into which the transponder has been implanted. An acceleration or deceleration of the transponder produced by the motions of the transponder carrier leads to the relative motion of one of the two components of the current generator, and thus to a conversion of kinetic to electrical energy.

In this way the integrated circuit and further elements possibly integrated into the transponder that may need power can then be supplied with power, for instance, while the transponder does not include a miniature battery that has a limited lifetime and a large size relative to the transponder dimensions.

The components of the current generator may be designed more particularly in such a way that a guidance of their motions relative to each other is realized through the shape of the components. The first component that generates a magnetic field is for instance designed as an annular magnet arranged around the coil that is designed as the second component, the coil then serving as the guide for a relative motion of the magnet in the coil's longitudinal direction.

According to the invention, an active or semi-passive transponder can now be provided that is adapted to be implanted into living beings, by having the current generator integrated into the miniature cover, and that is rechargeable, thus long-lived, by using the kinetic energy of the motions of the transponder carrier.

The energy storage module may for instance be designed as a capacitor or as a miniaturized storage battery, as known from the prior art, so that the energy storage module can be recharged by the electric current generated, and provides power for the integrated circuit as well as for further elements possibly integrated into the transponder and requiring energy.

A short-term storage device and/or a long-term storage device may be used as the energy storage module. Specifically even the antenna coil's own capacitance may be understood as a short-term storage device, so that the electric current induced in the coil is used immediately after its generation for instance, to transmit signals or to power the integrated circuit.

Advantageously, the energy storage module is continuously recharged by the electric current induced by the current generator.

The data storage module may include a write-protected memory able in particular to store transponder ID data, and/or a writable memory, so that also additional data e.g. from data acquisition elements integrated into the transponder, such as a thermometer or a receiver of additional measurement data, may be stored in the data storage module. To this effect the data storage module more particularly includes a nonvolatile memory, i.e., a memory holding stored data even without any power supply.

The transponder cover may consist of glass, plastic or even ceramic, and have an elongated, specifically a cylindrical shape. Yet the transponder cover may also be designed according to any other prior-art design, particularly those designs making it fit for implantation into living beings.

Therefore, the invention may be used for animal identification, like pets or livestock. However, the invention could also be used for any further kind of transponder-application wherein measurements have to be performed by the transponder and movement of the transponder is provided.

The invention will be explained in greater detail below with reference to examples of possible embodiments shown schematically in the drawings, in which:
- Figure 1: shows an implantable transponder of the prior art;
- Figure 2: shows a first embodiment of the transponder according to the invention, represented without the transponder cover, and in different positions of the magnet;
- Figure 3: shows the first embodiment of the transponder according to the invention, represented in a longitudinal section;
- Figure 4: shows a second embodiment of the transponder according to the invention, represented in a longitudinal section;
- Figure 5: shows a third embodiment of the transponder according to the invention, represented in a longitudinal section;
- Figure 6: shows a lateral view of the first embodiment of the transponder according to the invention, with the transponder cover longitudinally cut in half;
- Figure 7: shows a lateral view of a further embodiment of the transponder according to the invention;
- Figure 8: shows the first embodiment of the transponder according to the invention, the mouth of the transponder cover being open for production of the transponder, and closed; and
- Figure 9: shows the first embodiment of the transponder according to the invention, including additional data acquisition elements.

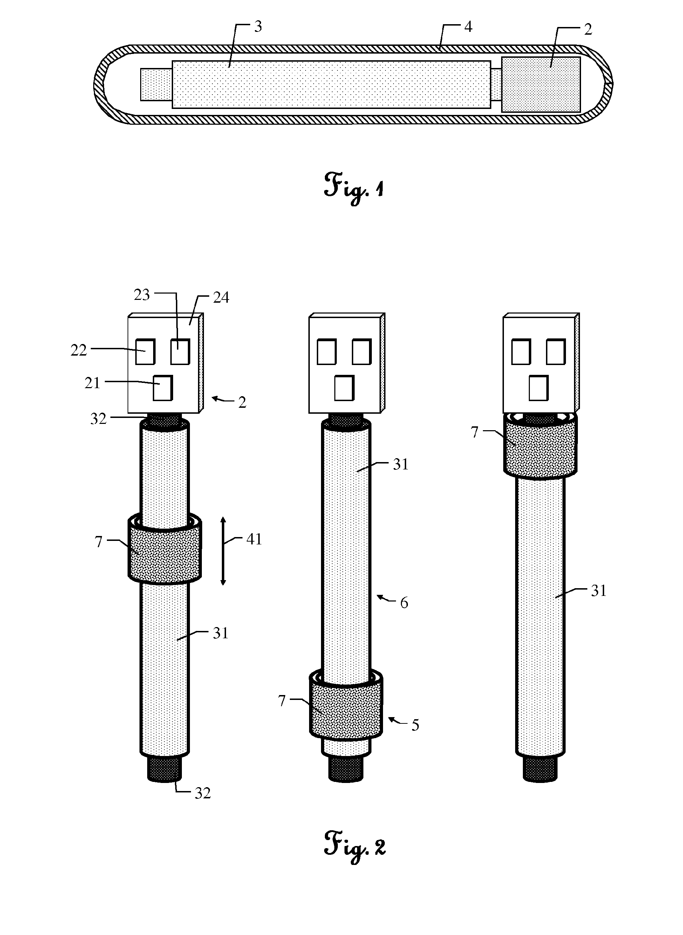

Figure 1 shows a passive transponder of the prior art suitable for implantation in living beings, in a longitudinal section. It includes an integrated circuit 2 designed as a microchip and supported by a miniaturized board. The integrated circuit 2 is arranged in longitudinal extension of an antenna 3 designed as a coil antenna with ferrite core, such that the integrated circuit 2 and antenna 3 may advantageously be housed in an elongated cylindrical transponder cover 4. The functioning of such a transponder has already been described at the outset.

Figure 2 shows an implantable transponder according to the invention in a first embodiment, the transponder cover for the purposes of illustration not being represented.

The transponder includes an integrated circuit 2 having at least a transceiver module 21, a data storage module 22, and an energy storage module 23, as well as an antenna 3 connected with the integrated circuit 2 for transmission and reception of a signal. Antenna 3 is designed here as a coil antenna 31 with ferrite core 32, and is cylinder-shaped. Integrated circuit 2 and the antenna are laid out in a linear array, the integrated circuit 2 being designed as a microchip on a miniature board and attached to antenna 3 as a longitudinal extension. The longitudinal axis of transponder 1 advantageously is essentially parallel to or coaxial with the longitudinal axis of coil antenna 31, this axis may also correspond to the line along which coil antenna 31 and integrated circuit 2 are arranged.

The transponder further includes a current generator with two components 5, 6 designed and arranged in such a way that they can move relative to each other in a guided fashion, and that an electric current is generated by a relative motion 41 that they perform relative to each other.

To this end, the first component 5 is designed as magnetic field generator, and more particularly as a magnet 7, and the second component 6 is designed as a coil antenna 31, so that the motion 41 of magnet 7 relative to coil antenna 31 will produce a variation in magnetic flux through an area enclosed by the windings of coil antenna 31, and thus an electric current is induced in coil antenna 31. The magnet may move in a guided fashion, more particularly along the longitudinal axis of coil antenna 31, so that magnet 7 may perform an axial up and down motion.

Coil antenna 31 which is used for the transmission and reception of data and which is connected with the integrated circuit 2, according to the invention is additionally used as a component of the integrated current generator.

The current induced in coil antenna 31 by the relative motion of magnet 7 can then be used, for instance, to charge the energy storage module 23.

In the first embodiment of the transponder represented in Figure 2, magnet 7 is designed in the shape of a ring or hollow cylinder, and arranged in such a way that it surrounds coil antenna 31, and can move in a guided way in the longitudinal direction of coil antenna 31. Magnet 7 here is made short relative to coil antenna 31, and may more particularly be moved up and down along the entire length of coil antenna 31, as can be seen from the magnet represented in three different positions.

As an alternative, coil antenna 31 could be less long, and the magnet could move beyond the ends of coil antenna 31 while moving up and down, so that magnet 7 would then surround coil antenna 31 only in some transient positions of its relative motion, and even then, only in part as the case may be.

Also, the transponder could have different guides for magnet 7 that would secure the guided relative translatory motion of the annular or hollow-cylinder-shaped magnet 7, for instance the inner wall of the transponder cover or another component included specifically for that purpose could be used to guide magnet 7.

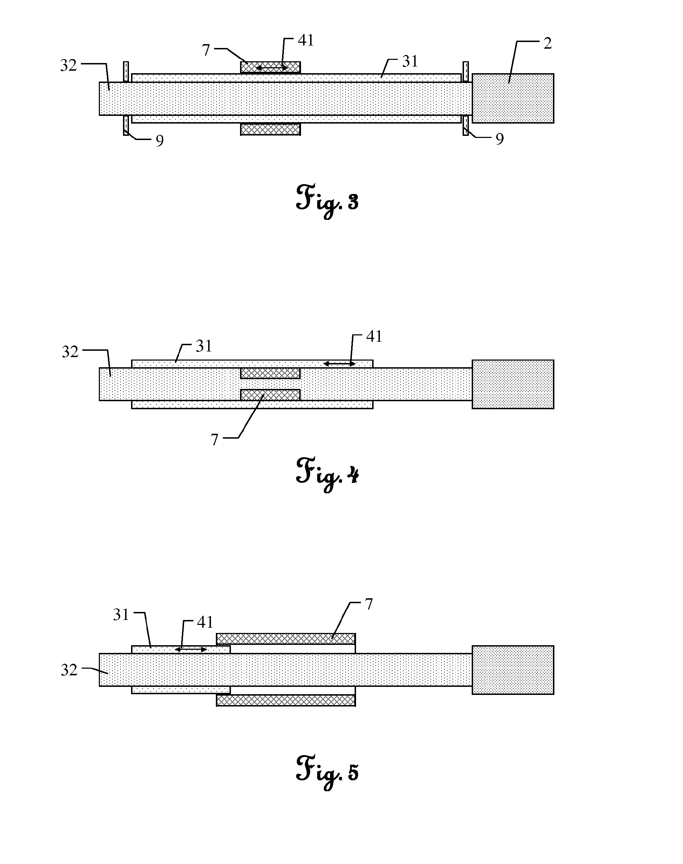

Figure 3 shows the transponder of Figure 2 in longitudinal section. The magnet 7 can move in the direction of the longitudinal axis of coil antenna 31, relative to said antenna, and - exemplarily - the translatory mobility 41 represented as an arrow is limited by stops 9.

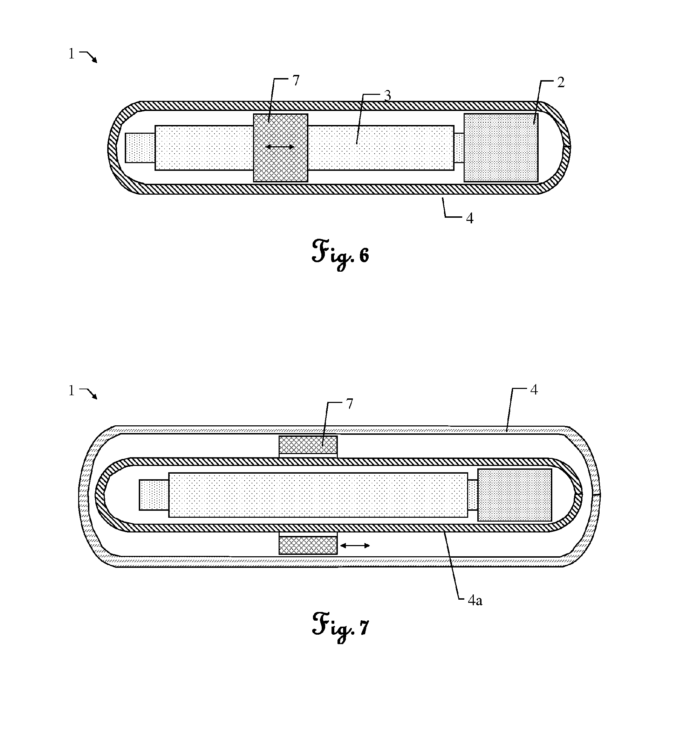

The integrated circuit 2 is set up in the longitudinal extension of ferrite core 32, as in Figure 2, so that the transponder parts represented may be housed in a space-saving way in an elongated transponder cover, to be reconsidered below in the description relating to Figure 6.

Figure 4 shows a second embodiment according to the invention, relating to the design and arrangement of the two components of the current generator represented without the transponder cover, and in longitudinal section of the transponder.

Here, a magnet 7 in the shape of a hollow cylinder serving as the first component of the integrated current generator is arranged within a recess specifically provided for it in ferrite core 32. Further, coil antenna 31 is wound around ferrite core 32 with inserted magnet 7, and arranged in such a way that coil antenna 3 can move in its longitudinal direction. To this effect, the wire loops for instance are directly wound around a plastic sleeve surrounding ferrite core 32 with little play, thus securing the guided motion 41 of coil antenna 31 relative to ferrite core 32, and hence also relative to magnet 7.

As an alternative, coil antenna 31 may also be designed without a ferrite core, and then a magnet 7, for instance in the shape of a cylinder, ring, or sphere, could be arranged so as to move through the windings of coil antenna 31.

Magnet 7 may for instance always move beyond the ends of coil antenna 31 when moving up and down. That is, magnet 7 may be arranged in such a way inside coil antenna 31, at least in part and at least in one position, that the magnetic flux through an area surrounded by the windings or through a space surrounded by the windings will change while magnet 7 moves up and down.

Figure 5 shows a third embodiment according to the invention, for the design and arrangement of the two components of the current generator, represented without the transponder cover and with the transponder in longitudinal section.

Here, magnet 7 as the first component of the current generator is for instance solidly attached in the shape of a hollow cylinder to the inside wall of the transponder cover, while coil antenna 31 is arranged so that it may move in a guided fashion through magnet 7. Guidance for the relative motion 41 of the coil antenna 31 may for instance be realized by ferrite core 32.

As an alternative, the transponder cover itself could at least in part be magnetic, and thus formed as the magnet 7.

The electric current is again induced in coil antenna 31 by a change in magnetic flux, the change in flux being produced in this embodiment by motion 41 of the coil antenna 31 relative to magnet 7.

Figure 6 shows in two dimensions a transponder 1 according to the invention, with the design and arrangement of the two components of the current generator from the embodiment represented in Figures 2 and 3, and with transponder cover 4 longitudinally cut in half.

Transponder cover 4 may then be made e.g. of glass, plastic or ceramic, and have an essentially cylindrical shape with rounded ends. In view of the linear arrangement of antenna 3 and of integrated circuit 2 where annular magnet 7 surrounds coil antenna 3 while it is mobile relative to antenna 3, so that antenna 3 is used in addition as a current generating component, these parts can be integrated with great space savings into the miniature transponder cover 4. According to the invention, an active or semi-passive transponder 1 can now be realized in small dimensions, particularly of its diameter, which has advantageous effects for introducing the transponder into a body. Also, the lifetime of transponder 1 can be improved according to the invention.

Any change in movement of the transponder carrier that includes a component of the change in movement in the longitudinal direction of transponder 1 will now cause a movement of magnet 7 relative to the coil antenna, and thus an induced current in the coil antenna.

The guided relative mobility of magnet 7 is limited in this embodiment, toward one side by the transponder cover 4 serving as a stop, and toward the other side by the board of the integrated circuit also serving as a stop.

In an alterative embodiment of the inventive transponder 1, especially for applications in livestock like bolus, the magnet 7 could also be positioned externally to the glass or plastic cover 4a, but internally to an additional ceramic cover 4 serving as external cover. In that case the ceramic cover is designed so as to enclose the magnet and the glass or plastic cover 4, as exemplarily shown in figure 7.

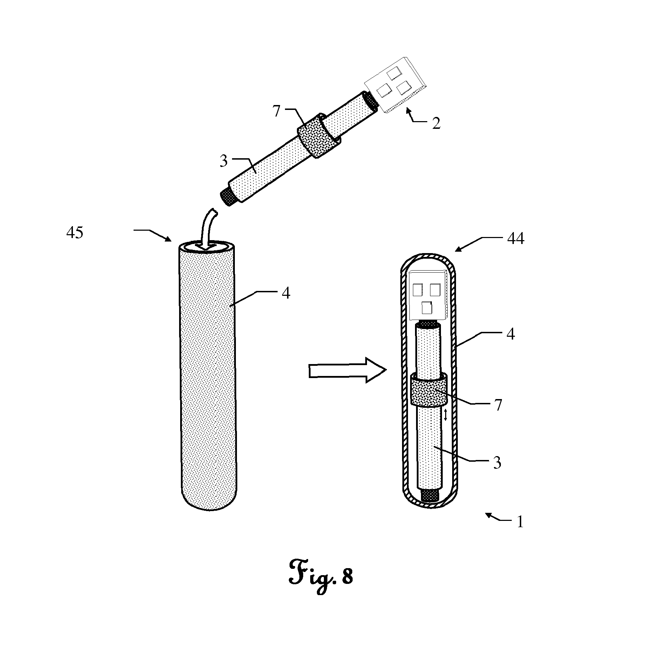

Figure 8 illustrates an exemplary assembly process for a transponder 1 according to the invention. A transponder unit consisting of antenna 3, integrated circuit 2 and magnet 7, that has already been assembled may now simply be introduced into a plastic cover having its mouth 45 open for assembly. The process described in the European Patent Application No. 07 116 195.4 entitled "Implantable Miniature Transponder and Method for the Production Thereof" can for instance be used for closing the transponder cover 4. The transponder 1 shown on the righthand side of Figure 7, hermetically closed with mouth 44 of the transponder cover closed, is adapted to be implanted into living beings.

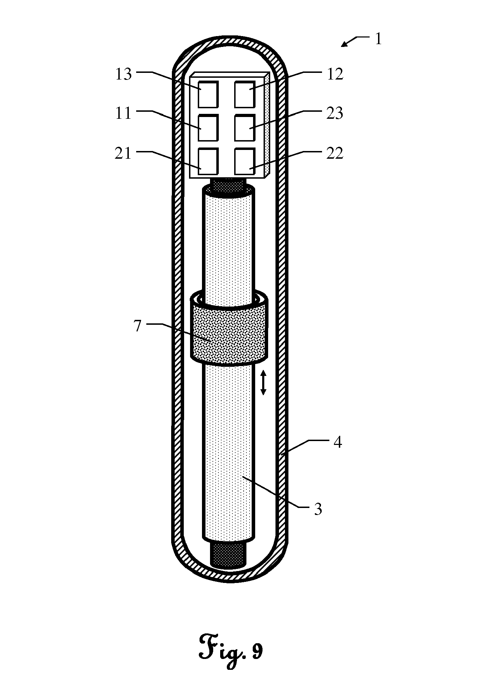

Figure 9 shows a transponder 1 according to the invention in the first embodiment described above, revealing the design and arrangement of magnet 7 and antenna 3, and the transponder cover 4 being longitudinally cut in half for illustration.

Now transponder 1 in addition includes several data acquisition elements for the acquisition of additional data, the data acquisition elements being powered by the energy storage module 23.

Specific data acquisition elements being present are a thermometer 11, a barometer 12, and a time signal receiver 13. The data acquisition elements or parts of these elements may more particularly be placed onto the miniature board of the integrated circuit.

As an alternative or in addition, the transponder 1 may also include a hygrometer, a radiation sensor, a shock or vibration sensor, an optical sensor, a chemical analytical sensor, a medical analytical sensor, and/or further data acquisition elements known from the prior art as the data acquisition element or elements.

The data storage module 22 then includes more particularly a writable memory space, so that any additional data that have been acquired may be stored and when needed interrogated by a reader.

Specifically, the additional data that have been acquired may each be associated with time data acquired for this purpose by the time signal receiver 13, so that an acquisition time can for instance be stored together with each set of additional data.

The figures shown do of course only represent examples of possible embodiments in a schematic way.

## Claims

1. Transponder (1) with
• an integrated circuit (2) comprising at least
• a transceiver module (21) and
• a data storage module (22) for providing ID data,
• an antenna (3) connected with the integrated circuit (2), for receiving and transmitting a signal, and
• a transponder cover (4),
**characterized by**
a current generator arranged within the transponder cover (4) comprising at least
• one magnetic field generator as a first component (5) and
• the antenna (3) as a second component (6), the components (5,6) being designed and arranged in such a way that they can move relative to each other and an electric current is generated in the antenna (3) by their relative motion (41).

2. Transponder (1) according to claim 1,
**characterized in that**
the transponder (1) is formed to be implantable into living beings.

3. Transponder (1) according to claim 1 or 2,
**characterized in that**
the components (5,6) are movable relative to each other in translation and guided.

4. Transponder (1) according to anyone of the preceding claims,
**characterized in that**
the integrated circuit (2) includes an energy storage module (23), and the electric current is used to charge the energy storage module (23).

5. Transponder (1) according to anyone of the preceding claims,
**characterized in that**
the antenna (3) is designed as a coil antenna (31), in particular with a ferrite core (32), and is cylinder-shaped, and the integrated circuit (2) in particular is arranged in longitudinal extension of the antenna (3).

6. Transponder (1) according to claim 5,
**characterized in that**
the first component (5) is designed as a magnet (7) and arranged in such a way that the relative motion (41) produces a change in magnetic flux through an area enclosed by windings of the coil antenna (31).

7. Transponder (1) according to claim 6,
**characterized in that**
the magnet (7) is designed in the shape of a ring or hollow cylinder, and arranged in such a way that it surrounds the coil antenna (31) at least in part and at least in one position, and can move in a guided fashion in its longitudinal direction, the longitudinal mobility of the magnet (7).

8. Transponder (1) according to claim 6,
**characterized in that**
the magnet (7) is designed in the shape of a cylinder, ring, or sphere, and arranged in such a way within the coil antenna (31), at least in part and at least in one position, that
• the magnet (7) can move in a guided fashion relative to the coil antenna (31) in the antenna's longitudinal direction, or
• the coil antenna (31) can move in a guided fashion in its longitudinal direction relative to the magnet (7).

9. Transponder (1) according to claim 6, **characterized in that**
• the magnet (7) is arranged as a hollow cylinder along the inner wall of the transponder cover, or the transponder cover (4) itself is magnetic, and thus designed as a magnet (7), and
• the coil antenna (31) can move in a guided fashion inside of the magnet (7).

10. Transponder (1) according to one of the preceding claims,
**characterized in that**
the transponder (1) includes one or several data acquisition elements (11,12,13) for the acquisition of additional data, in particular wherein the data acquisition elements (11,12,13) are powered from the energy storage module (23).

11. Transponder (1) according to claim 10,
**characterized in that**
at least one of the following:
• a thermometer (11),
• a barometer (12),
• a time signal receiver (13),
• a chemical analytical sensor, or
• a medical analytical sensor
is present as the one or several data acquisition elements (11,12,13).

12. Transponder (1) according to one of claims 10 or 11,
**characterized in that**
the data storage module (22) has writable memory space, particularly for the storage of the additional data.

13. Method for generating an electric current for a transponder (1),
the transponder (1) including
• an integrated circuit (2) comprising at least
□ a transceiver module (21) and
□ a data storage module (22) for providing data,
• an antenna (3) connected with the integrated circuit (2) for transmitting a signal, and
• a transponder cover (4),
**characterized in that**
a magnetic field generator - integrated into the transponder cover (4) - is arranged movable relative to the antenna (3),
wherein - caused by relatively moving the magnetic field generator with respect to the antenna (3) - a magnetic flux through an area enclosed by windings of the antenna (3) is changed and an electric current is induced in the antenna (3).

14. Method according to claim 13,
**characterized in that**
the electric current is used as power source for the integrated circuit (2) and/or for acquiring additional measurement data.

15. Method according to claim 13 or 14,
**characterized in that**
the magnetic field generator and the antenna are relatively moving translatory and guided with respect to each other.
